# EUROPÄISCHE PATENTSCHRIFT

(11) **EP 2 658 751 B1**
(45) Veröffentlichungstag und Bekanntmachung des Hinweises auf die Patenterteilung: **21.09.2016**
(21) Anmeldenummer: 11785451.3
(22) Anmeldetag: 23.11.2011
(51) Int. Cl.: B60S 1/24, F16B 4/00, F16C 11/06, F16C 7/02

(54) **SCHEIBENWISCHVORRICHTUNG**
WINDSCREEN WIPER DEVICE
ESSUIE-GLACE

(30) Priorität: 29.12.2010 DE 102010064306
(43) Veröffentlichungstag der Anmeldung: 06.11.2013
(73) Patentinhaber: Robert Bosch GmbH, 70442 Stuttgart (DE)
(72) Erfinder: TRENKLE, Lothar, 77815 Buehl (DE)
(86) Internationale Anmeldenummer: PCT/EP2011/070803
(87) Internationale Veröffentlichungsnummer: WO 2012/089428

(56) Entgegenhaltungen:
- DE-U1- 29 506 202
- FR-A- 1 445 670
- GB-A- 1 290 109
- GB-A- 2 080 408
- US-A1- 2002 076 265
- US-A1- 2004 253 049

## Beschreibung

Die vorliegende Erfindung betrifft eine Scheibenwischvorrichtung, insbesondere für ein Kraftfahrzeug, mit einem Wischermotor, der über eine Abtriebswelle ein Wischerge-stänge antreibt, wobei das Wischergestänge mindestens eine einen Wischerarm betätigende Gelenkstange aufweist, an deren Endbereichen mindestens eine Kugelschale vorgesehen ist.

### Stand der Technik

Derartige Scheibenwischvorrichtungen sind allgemein bekannt. Die darin eingesetzten Gelenkstangen werden größtenteils in zwei Ausführungsvarianten hergestellt. In einer ersten Variante werden die Schalen in die Gelenkstange eingespritzt. Dazu müssen jedoch die relativ langen Gelenkstangen in das Spritzwerkzeug eingelegt werden, was einen großen Platzbedarf und damit ein sehr teures Spritzgusswerkzeug erfordern.

Als zweite alternative Ausführungsform der im Stand der Technik bekannten Gelenkstangen sind Rohrgelenkstangen bekannt, bei denen das Kopfende so verpresst wird, dass sich die Rohrwandungen berühren und sich ein flacher Endbereich an der sonst rohrförmigen Gelenkstange ausbildet. In diesen flachen Endbereich wird ein Loch eingestanzt und anschließend eine Kunststoffkugelschale eingespritzt oder eingesetzt. Die Herstellung dieser Variante einer Gelenkstange ist wiederum sehr aufwendig und erfordert mehrere Arbeitsschritte. Außerdem muss auch bei dieser Ausführungsvariante zum Einspritzen der Kugelschalen in die gelochten Endbereiche der Gelenkstange die gesamte Gelenkstange in das Spritzgusswerkzeug eingesetzt werden.

US-A-2004/0253049 offenbart den Oberbegriff des Anspruchs 1.

Es ist daher Aufgabe der vorliegenden Erfindung, eine Scheibenwischvorrichtung bereitzustellen, deren Gelenkstange einfacher und kostengünstiger herstellbar ist.

Diese Aufgabe wird erfindungsgemäß durch die Merkmale des kennzeichnenden Teils des Anspruchs 1 gelöst.

### Offenbarung der Erfindung

Mit anderen Worten wird die Gelenkstange durch ein einfaches Rohrstück gebildet, welches aus kostengünstiger Meterware bezogen werden kann. Es ist kein Umbiegen des Blechs in ein U-Profil oder Ähnliches mehr notwendig. Auch eine nachträgliche Längenanpassung durch einfache Änderung der abgeschnittenen oder abgesägten Länge ist durch einen einfachen Arbeitsschritt realisierbar und somit kann ein Umrüsten eines meist modular aufgebauten Spritzgießwerkzeuges, bei dem eventuell noch ein einzelnes Längenmodul hergestellt werden müsste, entfallen.

Die Kugelschalenkappen, die einen Verbindungsbereich sowie die Kugelschalen selbst aufweisen, können in unabhängigen Werkzeugen vorab hergestellt, insbesondere spritzgegossen werden und nach Herstellung einfach auf die Endbereiche des Rohrstückes aufgesteckt und an dem Rohrstück ausgerichtet werden.

### Vorteile der Erfindung

In einem weiteren Ausführungsbeispiel der vorliegenden Erfindung ist vorgesehen, zur Fixierung der Kugelschalenkappen an dem Rohrstück an dessen End- oder Verbindungsbereichen jeweils eine Profilierung vorzusehen, die korrespondierend zu einem Aufsteckbereich an den Kugelschalenkappen ausgebildet sind, so dass sich nach Aufschieben der Kugelschalenkappen auf die offenen Endbereiche des Rohrstücks ein Formschluss zwischen dem Rohrstück und dem Aufsteckbereich der Kugelschalenkappen bildet. Durch diese Profilierung wird gewährleistet, dass sich die Kugelschalenkappen nicht ungewollt von den Endbereichen der Gelenkstange lösen.

Beispielsweise kann die Profilierung an den Endbereichen des Rohrstücks durch Rillen gebildet sein, die korrespondieren zu an dem Aufsteckbereich der Kugelschalenkappen vorgesehen Rillen ausgebildet sind.

Die Kugelschalenkappen gliedern sich im Wesentlichen in zwei Funktionseinheiten, nämlich in die eigentlichen Kugelschalen zur Aufnahme von Kugelbolzen, um die Gelenkstange mit einer an der Abtriebswelle vorgesehenen Motorkurbel zu verbinden, und einem Aufsteckbereich als Verbindungsbereich mit den Endabschnitten des Rohrstückes, um einen Verbindungsbereich mit letzterem zu bilden.

Um eine sichere und konstante Verbindung zwischen den Kugelschalen und beispielsweise einem an der Motorkurbel ausgebildeten Kugelbolzen zu gewährleisten, ist in einem weiteren Ausführungsbeispiel zwischen dem Ein- oder Aufsteckbereich der Kugelschalenkappen und dem Verbindungsbereich mit dem Rohrstück mindestens eine Verdrehsicherung vorgesehen. Die Verdrehsicherung kann beispielsweise durch mindestens eine an dem Verbindungsbereich von Rohrstange und Kugelschalenkappen ausgebildete Aussparung gebildet sein, in welche ein an dem Rohrstück und/oder dem Ein- oder Aufsteckbereich der Kugelschalenkappen korrespondierend ausgebildeter Vorsprung eingreift.

Alternativ ist zusätzlich auch möglich, die Verdrehsicherung durch an dem Rohrstück in deren Verbindungsbereich mit mindestens einer Kugelschalenkappe ausgebildete Längsvertiefungen oder Vertiefungen in Form einer Halbkugel bzw. eines Kugelabschnittes zu bilden, die in die korrespondierend zu letzteren ausgebildeten Vorsprünge in der Kugelschalenkappe hineingreifen.

In einem Ausführungsbeispiel der vorliegenden Erfindung liegt ein Kugelmittelpunkt, der an den Kugelschalenkappen vorgesehenen Kugelschalen in Verlängerung der Rohrachse des Rohrstücks. Natürlich ist es auch möglich, dass mindestens ein Kugelmittelpunkt der an mindestens einer der Kugelschalenkappen vorgesehenen Kugelschalen von einer Rohrmittelachse des Rohrstücks versetzt anzuordnen.

Die an den Endbereichen der Gelenkstange vorgesehenen Kugelschalen können auch zu einander verschränkt angeordnet sein, d.h. die von den zu führenden Kugelbolzen gebildeten Winkel weisen einen Winkelversatz relativ zur Rohrmittellinie auf.

In einem weiteren Ausführungsbeispiel der vorliegenden Erfindung ist vorgesehen, dass mindestens eine der an der Gelenkstange vorgesehenen Kugelschalen einseitig geschlossen ausgebildet ist. Natürlich ist es auch möglich, dass die an der Gelenkstange vorgesehenen Kugelschalen beidseitig geöffnet oder auch beidseitig geschlossen ausgebildet sind.

In einem bevorzugten Ausführungsbeispiel der vorliegenden Erfindung ist eine der an der Gelenkstange vorgesehenen Kugelschalen beidseitig geöffnet ausgebildet und eine zweite an der Gelenkstange vorgesehene Kugelschale einseitig geschlossen ausgebildet.

Eine besonders einfache Möglichkeit, die Kugelschalenkappen zu erzeugen, sieht vor, diese mittels Spritzguss zu fertigen.

Weitere vorteilhafte Ausgestaltungen der vorliegenden Erfindung sind den Unteransprüchen sowie der nachfolgenden Figurenbeschreibung zu entnehmen.

### Kurze Beschreibung der Zeichnung

Es zeigen:
- Figur 1: eine schematische Teildarstellung einer erfindungsgemäßen Scheibenwischvorrichtung gemäß dem Stand der Technik;
- Figur 2: eine Gelenkstange gemäß der Figur 1;
- Figur 3: eine perspektivische Darstellung einer erfindungsgemäßen Gelenkstange;
- Figur 4: die Gelenkstange gemäß der Figur 3 im Schnitt; und
- Figur 5: eine perspektivische Darstellung einer Gelenkstange mit verschränkten Kugelschalen.

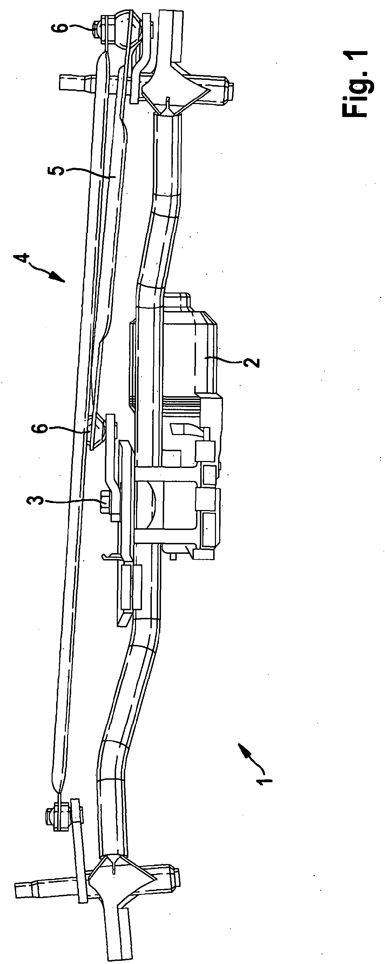

Die Figur 1 zeigt eine schematische Teildarstellung einer Scheibenwischvorrichtung 1 gemäß dem Stand der Technik.

Die Scheibenwischvorrichtung 1 weist einen Wischermotor 2 auf, der über eine Abtriebswelle 3 ein Wischergestänge 4 antreibt, wobei das Wischergestänge 4 mindestens eine einen nicht dargestellten Wischerarm betätigende Gelenkstange 5 aufweist.

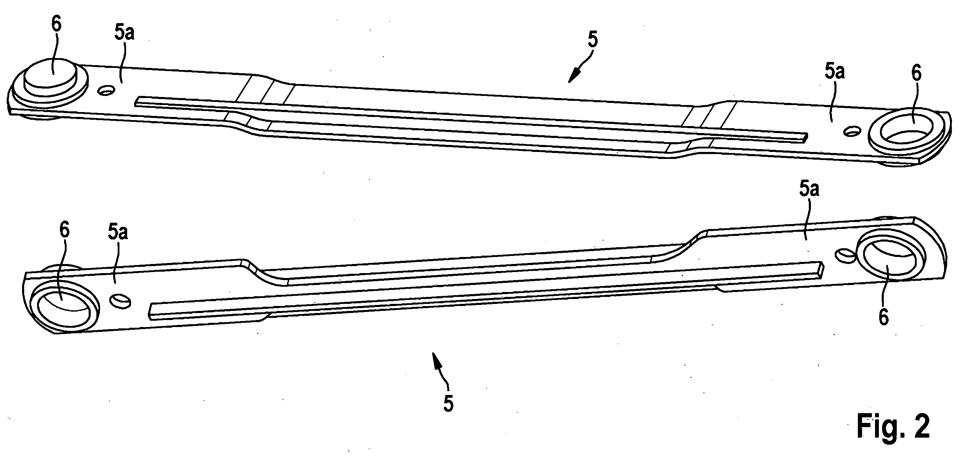

In die Gelenkstange 5 sind Kugelschalen 6 (siehe auch Figur 2) eingespritzt. Die Endbereiche 5a der in den Figuren 1 und 2 gezeigten Gelenkstangen 5 sind abgeflacht ausgeführt. Zur Einspritzung der Kugelschalen 6 ist ein Loch in die abgeflachten Endbereiche 5a der Rohrgelenkstange 5 eingestanzt, in welche anschließend die Kugelschalen 6 aus Kunststoff eingespritzt werden. Die Herstellung der Gelenkstangen 5 gemäß dem Stand der Technik ist jedoch sehr aufwendig. Auch die Spritzwerkzeuge zur Einbringung der Kugelschalen 6 sind teuer, da die relativ lange Gelenkstange 5 vollständig in ein Werkzeug der Kunststoffspritzgießmaschine eingelegt werden muss.

Um diese Nachteile zu überwinden, wird erfindungsgemäß eine Gelenkstange 5 vorgeschlagen, die durch ein Rohrstück 7 gebildet ist, auf dessen offene Endbereiche Kugelschalenkappen 8 vorgesehen sind, die auf das Rohrstück 7 aufgeschoben sind. Die Kugelschalenkappen 8 sind hier mittels Spritzguss gefertigt. Natürlich ist es auch möglich, die Kugelschalenkappen so auszubilden, dass ein Teil ihres Ein- oder Aufsteckbereiches 8a in das Rohrstück 7 eingreift und ein anderer Teil den Endabschnitt des Rohrstücks 7 umgreift.

An den Endabschnitten des Rohrstückes 7 sind jeweils Profilierungen in der Form von Rillen 9 ausgebildet, die korrespondierend zu in den Aufsteckbereich 8a der Kugelschalenkappen 8 ausgebildeten Rillen 10 ausgebildet sind, so dass sich nach Auf- bzw. Einschieben der Kugelschalenkappen 8 auf die offenen Endbereiche des Rohrstückes 7 ein Formschluss zwischen dem Rohrstück 7 und dem Aufsteckbereich 8a der Kugelschalenkappen 8 bildet, der eine axiale Fixierung der Kugelschalenkappen 8 an dem Rohrstück 7 gewährleisten.

Zwischen dem Aufsteckbereich 8a der Kugelschalenkappen 8 und den Endabschnitten des Rohrstücks 7 der Gelenkstange 5 ist jeweils eine nicht dargestellte Verdrehsicherung vorgesehen.

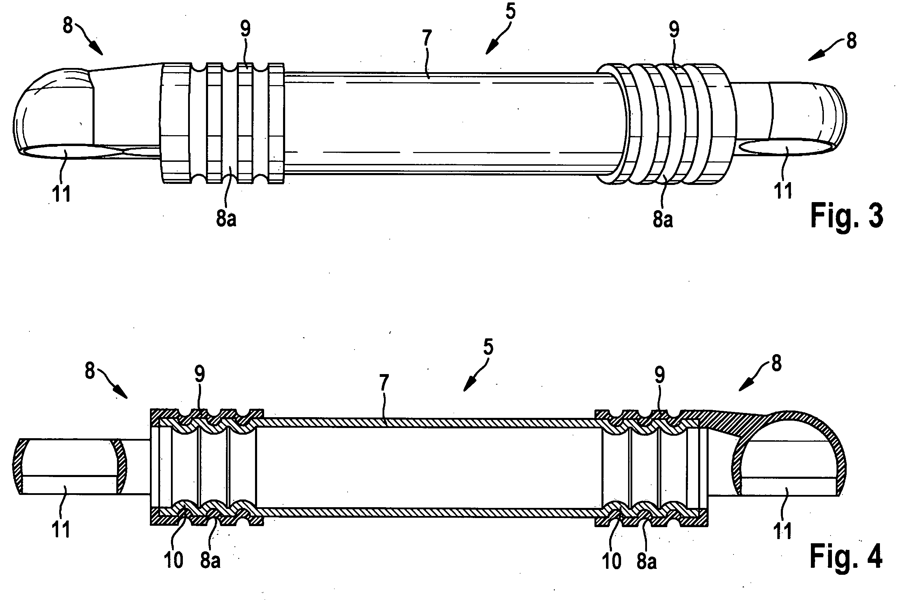

Wie in den Figuren 3 und 4 zu sehen, sind Kugelschalen 11 so an dem Rohrstück 7 angebracht, dass die Kugelmittelpunkte der Kugelschalen 11 in der Verlängerung einer durch das Rohrstück 7 der Gelenkstange 5 Rohrachse liegen. In einem nicht dargestellten Ausführungsbeispiel ist ein Kugelmittelpunkt einer der Kugelschalen 11 von der Rohrmittelachse des Rohrstücks 7 der Gelenkstange 5 hingegen versetzt angeordnet.

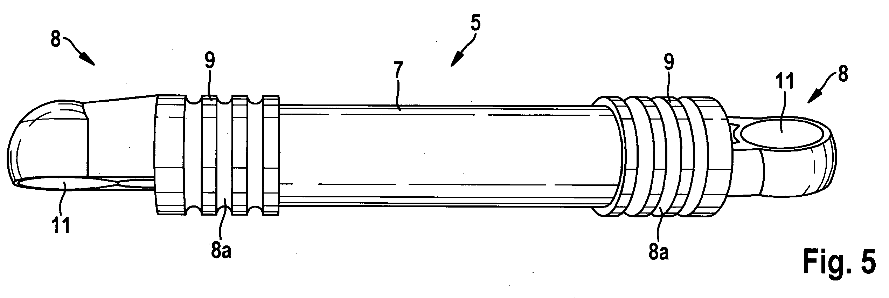

In Figur 5 ist eine Gelenkstange 5 gezeigt, deren Kugelschalen 11 zueinander verschränkt angeordnet sind, d.h. die durch die Kugelschalen 11 gebildeten Ebenen weisen einen Winkelversatz zueinander auf.

Durch die Möglichkeit, die Kugelschalenkappen 8 separat zu fertigen und dann entsprechend dem Einsatzgebiet an dem Rohrstück 7 anzubringen, ist es möglich, ein und dieselbe Konstruktion für verschiedene Einsatzgebiete zu nutzen. Dies kann beispielsweise dadurch gewährleistet werden, dass die Verdrehsicherung vor Einsetzen der Kugelschalenkappen 8 in das Rohrstück 7 beispielsweise durch eine Aussparung eingebracht werden und anschließend auf den Endbereich des Rohrstücks 7 aufgeschoben werden. Anschließend können sie jeweils so lange auf dem Rohrstück verdreht werden, bis ein in dem Aufsteckbereich 8a der Kugelschalenkappen 8 ausgebildeter Vorsprung in dafür vorgesehen Aussparungen in dem Rohrstück 7 einrastet.

## Patentansprüche

1. Scheibenwischvorrichtung (1) insbesondere für ein Kraftfahrzeug, mit mindestens einem Wischermotor (2), der über eine Abtriebswelle (3) ein Wischergestänge (4) antreibt, wobei das Wischergestänge (4) mindestens eine einen Wischerarm betätigende Gelenkstange (5) aufweist, an deren Endbereichen mindestens eine Kugelschale (6, 11) vorgesehen ist, wobei die Gelenkstange (5) durch ein Rohrstück (7) gebildet ist, auf an dessen offenen Endbereichen Kugelschalenkappen (8) vorgesehen sind, die auf das Rohrstück (7) aufschiebbar oder aufgesteckt sind, **dadurch gekennzeichnet, dass** zur Fixierung der Kugelschalenkappen (8) an dem Rohrstück (7) an den Endabschnitten des Rohrstücks (7) der Gelenkstange (5) jeweils eine Profilierung vorgesehen ist, die korrespondierend zu einem Aufsteckbereich (8a) an den Kugelschalenkappen (8) ausgebildet ist, so dass sich nach Aufschieben der Kugelschalenkappen (8) auf die offenen Endbereiche des Rohrstücks (7) der Gelenkstange (5) ein Formschluss zwischen Rohrstück (7) und dem Aufsteckbereich (8a) der Kugelschalenkappen (8) bildet.

2. Scheibenwischvorrichtung (1) nach Anspruch 1, **dadurch gekennzeichnet, dass** die Profilierung an den Endbereichen des Rohrstücks (7) der Gelenkstange durch Rillen (9) gebildet ist, die korrespondierend zu an dem Aufsteckbereich (8) der Kugelschale (5) vorgesehene Rillen (10) ausgebildet ist.

3. Scheibenwischvorrichtung (1) nach einem der vorhergehenden Ansprüche, **dadurch gekennzeichnet, dass** zwischen dem Aufsteckbereich (8a) der Kugelschalenkappen (8) und der Gelenkstange (5) mindestens eine Verdrehsicherung vorgesehen ist.

4. Scheibenwischvorrichtung (1) nach Anspruch 3, **dadurch gekennzeichnet, dass** die Verdrehsicherung durch mindestens eine in dem Verbindungsbereich von Rohrstück (7) und Kugelschalenkappen (8) ausgebildete Aussparungen gebildet ist, in welche ein an dem Rohrstück (7) und/oder dem Aufsteckbereich (8a) der Kugelschalenkappen (8) korrespondierend ausgebildeter Vorsprung eingreift.

5. Scheibenwischvorrichtung (1) nach Anspruch 3, **dadurch gekennzeichnet, dass** die Verdrehsicherung durch in das Rohrstück (7) in deren Verbindungsbereich mit der Kugelschalenkappen (8) ausgebildete Längsvertiefungen oder Vertiefungen in Form einer Halbkugel bzw. eines Kugelabschnittes gebildet ist, in die korrespondierend zu letzteren ausgebildete Vorsprünge in der Kugelschalenkappe (8) hineingreifen.

6. Scheibenwischvorrichtung (1) nach einem der vorhergehenden Ansprüche, **dadurch gekennzeichnet, dass** ein Kugelmittelpunkt der an den Kugelschalenkappen (8) vorgesehenen Kugelschalen (11) in Verlängerung einer Rohrachse des Rohrstücks (7) liegen.

7. Scheibenwischvorrichtung (1) nach einem der Ansprüche 1 bis 5, **dadurch gekennzeichnet, dass** mindestens ein Kugelmittelpunkt der an mindestens einer der Kugelschalenkappen (8) vorgesehenen Kugelschalen (11) von einer Rohrmittelachse des Rohrstücks (7) der Gelenkstange (5) versetzt angeordnet ist.

8. Scheibenwischvorrichtung (1) nach einem der vorhergehenden Ansprüche, **dadurch gekennzeichnet, dass** die an den Endbereichen der Gelenkstange (5) vorgesehenen Kugelschalen (11) zueinander verschränkt angeordnet sind.

9. Scheibenwischvorrichtung (1) nach einem der vorhergehenden Ansprüche, **dadurch gekennzeichnet, dass** mindestens eine der auf das Rohrstück (7) aufschiebbaren Kugelschalen (11) einseitig geschlossen ausgebildet ist.

10. Scheibenwischvorrichtung (1) nach einem der vorhergehenden Ansprüche, **dadurch gekennzeichnet, dass** mindestens eine der an der Gelenkstange (5) vorgesehenen Kugelschalen (11) beidseitig geöffnet ausgebildet ist.

11. Scheibenwischvorrichtung (1) nach einem der vorhergehenden Ansprüche, **dadurch gekennzeichnet, dass** eine der an der Gelenkstange (5) vorgesehenen Kugelschalen (11) beidseitig geöffnet ausgebildet ist und eine zweite an der Gelenkstange vorgesehene Kugelschale (11) einseitig geschlossen ausgebildet ist.

12. Scheibenwischvorrichtung (1) nach einem der vorhergehenden Ansprüche, **dadurch gekennzeichnet, dass** die Kugelschalenkappen (8) mittels Spritzguss gefertigt sind.

## Claims

1. Windscreen wiper device (1), in particular for a motor vehicle, with at least one wiper motor (2) which drives a wiper linkage (4) via an output shaft (3), wherein the wiper linkage (4) has at least one joint rod (5) which actuates a wiper arm and at the end regions of which at least one ball socket (6, 11) is provided, wherein the joint rod (5) i.s formed by a tubular section (7), on the open end regions of which ball socket caps (8) are provided which can be pushed or plugged onto the tubular section (7), **characterized in that**, in order to secure the ball socket caps (8) on the tubular section (7), a respective profiling is provided on the end portions of the tubular section (7) of the joint rod (5), said profiling being designed in a manner corresponding to a plug-on region (8a) on the ball socket caps (8), and therefore, after the ball socket caps (8) are pushed onto the open end regions of the tubular section (7) of the joint rod (5), an interlocking connection between tubular section (7) and the plug-on region (8a) of the ball socket caps (8) forms.

2. Windscreen wiper device (1) according to Claim 1, **characterized in that** the profiling of the end regions of the tubular section (7) of the joint rod is formed by grooves (9) which are designed in a manner corresponding to grooves (10) provided on the plug-on region (8) of the ball socket (5).

3. Windscreen wiper device (1) according to either of the preceding claims, **characterized in that** at least one means of securing against rotation are provided between the plug-on region (8a) of the ball socket caps (8) and the joint rod (5).

4. Windscreen wiper device (1) according to Claim 3, **characterized in that** the means of securing against rotation is formed by at least one recess which is formed in the connecting region of tubular section (7) and ball socket caps (8) and in which a projection formed in a manner corresponding to the tubular section (7) and/or the plug-on region (8a) of the ball socket caps (8) engages.

5. Windscreen wiper device (1) according to Claim 3, **characterized in that** the means of securing against rotation is formed by longitudinal depressions or depressions which are formed in the tubular section (7), in the connecting region thereof to the ball socket caps (8), and are in the form of a hemisphere or a spherical portion in which projections designed in a manner corresponding thereto engage in the ball socket cap (8).

6. Windscreen wiper device (1) according to one of the preceding claims, **characterized in that** a ball centre point of the ball sockets (11) provided on the ball socket caps (8) is an extension of a tube axis of the tubular section (7).

7. Windscreen wiper device (1) according to one of Claims 1 to 5, **characterized in that** at least one ball centre point of the ball sockets (11) provided on at least one of the ball socket caps (8) is arranged offset from a tube centre axis of the tubular section (7) of the joint rod (5).

8. Windscreen wiper device (1) according to one of the preceding claims, **characterized in that** the ball sockets (11) provided on the end regions of the joint rod (5) are arranged in an interlocked manner with respect to each other.

9. Windscreen wiper device (1) according to one of the preceding claims, **characterized in that** at least one of the ball sockets (11) which can be pushed onto the tubular section (7) is formed in a manner closed on one side.

10. Windscreen wiper device (1) according to one of the preceding claims, **characterized in that** at least one of the ball sockets (11) provided on the joint rod (5) is formed in a manner open on both sides.

11. Windscreen wiper device (1) according to one of the preceding claims, **characterized in that** one of the ball sockets (11) provided on the joint rod (5) is formed in a manner open on both sides, and a second ball socket (11) provided on the joint rod is formed in a manner closed on one side.

12. Windscreen wiper device (1) according to one of the preceding claims, **characterized in that** the ball socket caps (8) are manufactured by means of injection moulding.

## Revendications

1. Dispositif d'essuie-glace (1), en particulier pour un véhicule automobile, comprenant au moins un moteur d'essuie-glace (2) qui entraîne une tringlerie d'essuie-glace (4) par le biais d'un arbre de prise de force (3), la tringlerie d'essuie-glace (4) présentant au moins une tige d'articulation (5) actionnant un bras d'essuie-glace, au niveau des régions d'extrémité de laquelle est prévue au moins une coque sphérique (6, 11), la tige d'articulation (5) étant formée par une pièce tubulaire (7) au niveau des régions d'extrémité ouvertes de laquelle sont prévus des capuchons de coque sphérique (8) qui peuvent être poussés ou enfichés sur la pièce tubulaire (7), **caractérisé en ce que** pour la fixation des capuchons de coque sphérique (8) sur la pièce tubulaire (7), un profilé est à chaque fois prévu au niveau des portions d'extrémité de la pièce tubulaire (7) de la tige d'articulation (5), lequel profilé est réalisé de manière correspondant à une région d'enfichage (8a) au niveau des capuchons de coque sphérique (8), de telle sorte qu'après l'enfoncement des capuchons de coque sphérique (8) sur les régions d'extrémité ouvertes de la pièce tubulaire (7) de la tige d'articulation (5), un engagement par correspondance de formes soit réalisé entre la pièce tubulaire (7) et la région d'enfichage (8a) des capuchons de coque sphérique (8).

2. Dispositif d'essuie-glace (1) selon la revendication 1, **caractérisé en ce que** le profilage est formé au niveau des régions d'extrémité de la pièce tubulaire (7) de la tige d'articulation par des rainures (9) qui sont réalisées de manière à correspondre à des rainures (10) prévues sur la région d'enfichage (8) de la coque sphérique (5).

3. Dispositif d'essuie-glace (1) selon l'une quelconque des revendications précédentes, **caractérisé en ce qu'**entre la région d'enfichage (8a) des capuchons de coque sphérique (8) et la tige d'articulation (5) est prévue au moins une fixation antirotation.

4. Dispositif d'essuie-glace (1) selon la revendication 3, **caractérisé en ce que** la fixation antirotation est formée par au moins un évidement réalisé dans la région de connexion de la pièce tubulaire (7) et des capuchons de coque sphérique (8), dans lequel évidement s'engage une saillie réalisée de manière correspondante au niveau de la pièce tubulaire (7) et/ou de la région d'enfichage (8a) des capuchons de coque sphérique (8).

5. Dispositif d'essuie-glace (1) selon la revendication 3, **caractérisé en ce que** la fixation antirotation est formée par des renfoncements longitudinaux réalisés dans la pièce tubulaire (7) dans sa région de connexion avec les capuchons de coque sphérique (8) ou par des renfoncements en forme de demi-sphère ou de portion de sphère, dans lesquels s'engagent des saillies réalisées de manière correspondant à ces derniers dans le capuchon de coque sphérique (8).

6. Dispositif d'essuie-glace (1) selon l'une quelconque des revendications précédentes, **caractérisé en ce qu'**un centre de sphère des coques sphériques (11) prévues au niveau des capuchons de coque sphérique (8) est situé dans le prolongement d'un axe de tube de la pièce tubulaire (7).

7. Dispositif d'essuie-glace (1) selon l'une quelconque des revendications 1 à 5, **caractérisé en ce qu'**au moins un centre de sphère des coques sphériques (11) prévues au niveau d'au moins l'un des capuchons de coque sphérique (8) est disposé de manière décalée par rapport à un axe médian de tube de la pièce tubulaire (7) de la tige d'articulation (5).

8. Dispositif d'essuie-glace (1) selon l'une quelconque des revendications précédentes, **caractérisé en ce que** les coques sphériques (11) prévues au niveau des régions d'extrémité de la tige d'articulation (5) sont disposées de manière tordue l'une par rapport à l'autre.

9. Dispositif d'essuie-glace (1) selon l'une quelconque des revendications précédentes, **caractérisé en ce qu'**au moins l'une des coques sphériques (11) pouvant être enfoncées sur la pièce tubulaire (7) est réalisée de manière fermée d'un côté.

10. Dispositif d'essuie-glace (1) selon l'une quelconque des revendications précédentes, **caractérisé en ce qu'**au moins l'une des coques sphériques (11) prévues au niveau de la tige d'articulation (5) est réalisée de manière ouverte des deux côtés.

11. Dispositif d'essuie-glace (1) selon l'une quelconque des revendications précédentes, **caractérisé en ce que** l'une des coques sphériques (11) prévues au niveau de la tige d'articulation (5) est réalisée de manière ouverte des deux côtés et une deuxième coque sphérique (11) prévue sur la tige d'articulation est réalisée de manière fermée d'un côté.

12. Dispositif d'essuie-glace (1) selon l'une quelconque des revendications précédentes, **caractérisé en ce que** les capuchons de coque sphérique (8) sont fabriqués par moulage par injection.
